# EUROPEAN PATENT SPECIFICATION

(11) **EP 3 379 848 B1**
(45) Date of publication and mention of the grant of the patent: **06.11.2019**
(21) Application number: 16879097.0
(22) Date of filing: 05.07.2016
(51) Int. Cl.: G06F 3/041, H04R 9/06, H04R 7/02, G06F 3/0488, G06F 3/0362

(54) **SPEAKER DEVICE INCLUDING TOUCH DISPLAY**
LAUTSPRECHERVORRICHTUNG MIT BERÜHRUNGSANZEIGE
DISPOSITIF DE HAUT-PARLEUR COMPRENANT UN ÉCRAN TACTILE

(30) Priority: 22.12.2015 KR 20150183967
(43) Date of publication of application: 26.09.2018
(73) Proprietor: Samsung Electronics Co., Ltd., Suwon-si, Gyeonggi-do 16677 (KR)
(72) Inventor: HWANG, Seon-ho, Yongin-si Gyeonggi-do 17082 (KR)
(74) Representative: Nederlandsch Octrooibureau
(86) International application number: PCT/KR2016/007211
(87) International publication number: WO 2017/111229

(56) References cited:
- JP-A- S5 840 996
- KR-A- 20100 127 400
- KR-A- 20110 008 608
- KR-B1- 101 455 790
- US-A1- 2015 003 630
- US-A1- 2015 030 189
- US-A1- 2015 116 217
- US-A1- 2015 153 867

## Description

### Technical Field

Apparatuses and methods consistent with example embodiments relate to a speaker device including a touch display, and more particularly, to a speaker device including a touch display disposed at a central part of a vibration plate included in the speaker.

### Description of Related Art

In recent years, many users use wireless speakers. Functions that require a user input, such as connecting to a wireless Internet and reproducing a music content in a streaming method, modifying a playlist of a content reproduced through a wireless speaker, or the like, are mounted in the wireless speaker. However, there is a problem that it is difficult to use various functions of a speaker without an additional input devices such as a keyboard, a mouse, and the like.

To resolve this problem, wireless speakers which include an inputter, such as several buttons and the like, have been developed; however, if the inputter is included in the sound emission direction, an acoustic problem is generated. Further, there is a problem that the functions of a speaker which are capable of being controlled through buttons are limited. US 2015/030189 A1 discloses an electronic device including a piezoelectric element and a vibrating plate that vibrates due to the piezoelectric element, the electronic device causing the vibrating plate to generate air-conducted sound and vibration sound that is transmitted by vibrating a part of a human body. JP S58 40996 A discloses a scale display plate set at the front of the speaker to display the input signal which is applied to the speaker and then giving a warning to reduce an excessive input. Us 2015/0116217 A1 discloses a peripheral device control system including a wearable electronic device configured to generate a control command based on a bezel rotation of a display portion and a peripheral device operable to perform at least one function that is controlled in response to the control command generated by the wearable electronic device.

Accordingly, there is a demand for a wireless speakers which includes an inputter in the sound emission direction and does not generate an acoustic problem.

### Detailed description

### Technical problem

One or more example embodiments provide a speaker device which includes a touch display which is capable of displaying a user interface (UI) for receiving a user input in the sound emission direction from among several sides of a speaker.

### Solution to problem

According to an aspect of an example embodiment, there is provided a speaker device, comprising: a speaker; a touch display which is disposed at a central part of a vibration plate included in the speaker, displays a user interface (UI) for receiving an input of a user operation, and receives an input of a user's touch; and a processor configured to control the speaker device according to a user operation input through the UI, characterized in that the touch display forms a rotation knob that receives an input of a user operation through rotation.

The touch display may be coupled to an upper part of a dust cap disposed at a central part of the vibration plate.

The speaker device may further include a communicator configured to carry out communication with an external device. The processor may control the touch display to display a UI for receiving an input of a password for connecting to a wireless Internet, and based on a user command to adjust a volume being input through at least one of the rotation knob and the user's touch, controls the communicator to connect to the wireless Internet.

The processor may control the touch display to display a UI for adjusting a volume, and based on a user command to adjust a volume being input through at least one of the rotation knob and the touch display, control the speaker to adjust a volume based on the user command.

The processor may control the touch display to display a title of a content being reproduced and to display a play list including the content being reproduced according to a user operation to drag the touch display or rotate the rotation knob.

The processor may control the touch display to display lyrics of a content being reproduced and to display a previous sentence of a sentence of the displayed lyrics or a next sentence of the sentence of the displayed lyrics according to a user operation to rotate the rotation knob.

The processor may control the touch display to display a UI for receiving an input of a user operation to select at least one of a genre selection, a volume adjustment, and a sound quality adjustment and to, based on a user operation being input through a touch input or a rotation of the rotation knob, display a subordinate UI corresponding to the user operation.

The speaker device may further include a communicator configured to carry out communication with an external device. The processor may, based on a user operation being input through the touch display, control the communicator to transmit a signal corresponding to the user operation to an external server.

The processor may, based on a user operation not being input for a predetermined time or longer, control the touch display to display a UI indicating a standby mode.

The UI indicating the standby mode may include at least one of a current time, a title of a content being reproduced, and a remaining battery.

### Effect of the invention

As described above, according to the various example embodiments of the present disclosure, a user can control a variety of functions of a speaker from a sound emission direction.

### Brief Description of Drawings

FIG. 1 is a block diagram illustrating a brief configuration of a speaker device, according to an example embodiment;
FIG. 2 is a diagram illustrating a detailed structure of a speaker device, according to an example embodiment.
FIGS. 3-9 are diagrams illustrating various example embodiments in which a UI for receiving an input of a user operation for controlling a speaker device is displayed, according to an example embodiment.

### Preferred embodiments for carrying out the invention

Terms used in the description of the various example embodiments of the present disclosure are briefly described and then the various example embodiments of the present disclosure will be described in greater detail.

The terms used in the example embodiments of the present disclosure are general terms which are widely used now and selected considering the functions of the present disclosure. However, the terms may vary depending on the intention of a person skilled in the art, a precedent, or the advent of new technology. Further, in specific cases, terms may be arbitrarily selected. In this case, the meaning of the terms will be described in the description of the corresponding embodiments. Therefore, terms used in the present disclosure may be defined based on a meaning of the terms and contents described in the present disclosure, not simply based on names of the terms.

In the present disclosure, terms including an ordinal number such as 'first', 'second', etc. may be used to describe various components, but the components are not to be construed as being limited to the terms. The terms are only used to differentiate one component from other components. For example, the 'first' component may be named the 'second' component, and vice versa, without departing from the scope of the present disclosure. The term 'and/or' includes a combination of a plurality of items or any one of a plurality of terms.

Further, in the present disclosure, singular forms used in the specification are intended to include plural forms unless the context clearly indicates otherwise.

Further, it will be further understood that the terms "comprises" or "have" used in the present disclosure, specify the presence of stated features, numerals, steps, operations, components, parts mentioned in this specification, or a combination thereof, but do not preclude the presence or addition of one or more other features, numerals, steps, operations, components, parts, or a combination thereof.

Further, in the present disclosure, a 'module' or a 'unit' performs at least one function or operation and may be implemented by hardware or software or a combination of the hardware and the software. Further, a plurality of 'modules' or a plurality of 'units' are integrated into at least one module except for the 'module' or 'unit' which needs to be implemented by specific hardware and thus may be implemented by at least one processor.

Further, in the present disclosure, a case in which any one part is connected with the other part includes a case in which the parts are directly connected with each other and a case in which the parts are electrically connected with each other with other elements interposed therebetween.

Further, in the present disclosure, an input, e.g., a user input, may include at least one of a touch input, a bending input, a speech input, a button input, and a multimodal input, but is not limited thereto.

Further, in the present disclosure, "application" may refer, for example, to a set of computer programs designed to perform a specific task. In the example embodiments of the present disclosure, the application may be diverse. For example, the application may include a game application, a moving image replay application, a map application, a memo application, a calendar application, a phone book application, a broadcast application, an exercise support application, a payment application, a photo folder application, and the like, but is not limited these.

Unless indicated otherwise, it is to be understood that all the terms used in the disclosure including technical and scientific terms has the same meaning as those that are understood by those who skilled in the art. The terms defined in a generally used dictionary should be interpreted as having the same meanings as the contextual meanings of the relevant technology and should not be interpreted as having ideal or exaggerated meanings unless they are clearly defined in the various exemplary embodiments.

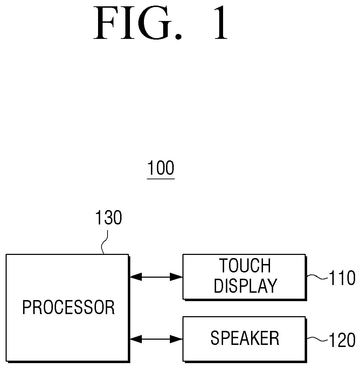

Hereinafter, the present disclosure will be described in greater detail with reference to the accompanying drawings. FIG. 1 is a diagram illustrating a configuration of a speaker device, according to an example embodiment. As illustrated in FIG. 1, a speaker device 100 includes a touch display 110, a speaker 120, and a processor 130. According to an example embodiment, the speaker device 100 may be implemented as various speaker devices, such as a wireless speaker, a Bluetooth speaker, a portable speaker, and the like.

The touch display 110 receives an input of a user's touch and outputs image data. In particular, the touch display 110 is disposed at a central part of a vibration plate included in the speaker device. In addition, the touch display 110 may display a UI for receiving an input of a user operation and receive a user's touch. In addition, the touch display 110 may be coupled to an upper portion of a dust cap disposed at a central part of a vibration plate included in the speaker 120. In addition, the touch display 110 may include a rotation knob which is coupled to the touch display 110 and receives an input of a user operation through rotation.

The speaker 120 outputs various kinds of alarm sounds or voice messages in addition to various audio data on which various processing operations such as decoding, amplification, and noise filtering are performed by an audio processor. In particular, the speaker 120 may output an audio content received through a near field wireless communication. Meanwhile, the speaker 120 may be implemented as a variety of output terminals which are capable of outputting audio data.

The processor 130 may include various processing circuitry and controls overall operations of the speaker apparatus 100. In particular, the processor 130 may control the speaker device 100 according to a user operation input through the touch display 110.

In more detail, the processor 130 may control the touch display to display a UI for receiving an input of a password for connecting with a wireless Internet. In addition, when a password for connecting with a wireless Internet is input through at least one of a rotation knob included in the touch display and the touch display, the processor 110 may control a communicator to connect with a wireless Internet. According to an example embodiment, the processor may control the touch display 110 to display alphabets, numbers, or the like, in order by rotating the rotation knob included in the touch display 110. In addition, the processor may, when a desired alphabet or a desired number is displayed, receive a password through a user input to select the alphabet or the number through the touch display 110.

In addition, when a user operation is input through the touch display 110, the processor 130 may control the communicator to transmit a signal corresponding to the input user operation to an external server. For example, while a music content is reproduced, the processor 130 may control the touch display 110 to display a UI for receiving an input of a preference regarding the music content currently being reproduced. In addition, when a preference regarding a music content currently being reproduced is input through the touch display 110, the processor 130 may control the communicator to transmit a signal corresponding to the input preference to a music content providing server transmitting the music content.

In addition, the processor 130 may control the touch display 110 to display a UI for controlling a volume. In addition, when a user command to control a volume is input through at least one of a rotation knob included in the touch display 110 and the touch display 110, the processor 130 may control the speaker 120 to control a volume based on the input user command.

In addition, the processor 130 may control the touch display 110 to display a title of a content being reproduced. In addition, the processor 130 may control the touch display 110 to display a play list including a content being reproduced, according to a user operation to drag a touch display or rotate a rotation knob. For example, while a title of a content currently being reproduced is displayed through the touch display 110, when a user operation to drag downward is input through the touch display 110, the processor 110 may control the touch display 110 to display a title of a content corresponding to the next reproduction order of the currently reproduced content. As another example, while a title of a content currently being reproduced is displayed through the touch display 110, when a user operation to rotate a rotation knob clockwise is input, the processor 110 may control the touch display 110 to display a title of a content corresponding to the next reproduction order of the currently reproduced content.

Further, the processor 130 may control the touch display 110 to display lyrics of a content currently being reproduced. In addition, the processor 130 may control the touch display 110 to display the previous or next sentence of the displayed lyrics, according to a user operation to drag the touch display 110 or rotate a rotation knob. For example, while lyrics of a content currently being reproduced are displayed through the touch display 110, when a user operation to drag upward is input through the touch display 110, the processor 110 may control the touch display 110 to display the previous sentence of the displayed lyrics. As another example, while lyrics of a content currently being reproduced are displayed through the touch display 110, when a user operation to rotate a rotation knob counterclockwise, the processor 110 may control the touch display 110 to display the previous sentence of the displayed lyrics.

In addition, the processor 130 may control the touch display 110 to display a UI for receiving an input of a user operation to select at least one of a genre selection, a volume control and a sound quality adjustment. In addition, when a user operation is input through at least one of a touch input to the touch display 110 or a rotation of a rotation knob, the processor 130 may control the touch display 110 to display a subordinate UI corresponding to the input user operation. For example, when a user operation for genre selection is input while a UI to receive an input of a user operation is displayed through the touch display 110, the processor 130 may control the touch display to display a UI for selecting a genre of a music content being reproduced.

In addition, when a user operation is not input for a predetermined time or longer, the processor 130 may control the touch display 110 to display a UI indicating a standby mode. In more detail, when a user operation is not input for one minute or longer, the processor 130 may control the touch display 110 to display a UI including at least one of a current time, a title of a content being reproduced, and a remaining battery. The UI indicating a standby mode being a UI including at least one of a current time, a title of a content being reproduced, and a remaining battery is only an example, and the processor 130 may control the touch display 110 not to display any screen in the standby mode.

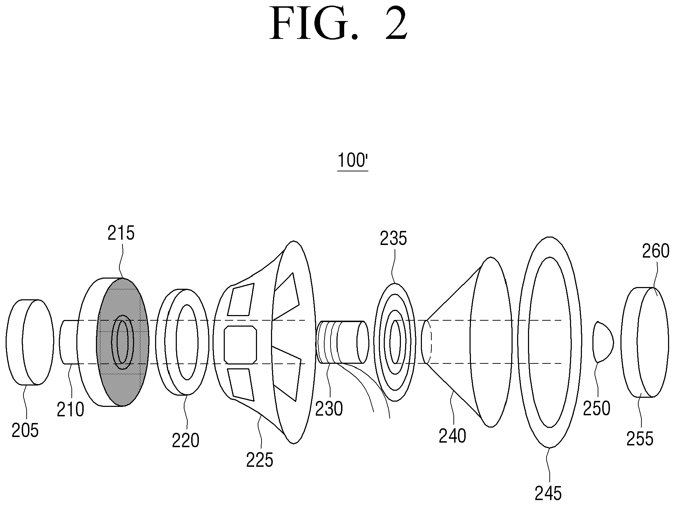

A structure of a speaker 120 included in the speaker device 100 will be described in detail below with reference to FIG. 2. As illustrated in FIG. 2, a speaker 120 includes a bottom plate 25, a pole piece 210, a magnet 215, a top plate 220, a basket 225, a voice coil 230, a spider 235, a cone 240, an edge surround 245, a dust cap 250, a rotation knob 255, and a touch display 360.

The bottom plate 205 plays a role of a path through which a magnetic line of force passes. In addition, the bottom plate 205 includes a pure iron to smooth the flow of the magnetic line of force.

The magnet 215 is a core component of a magnetic circuit and induces the voice coil 230 to vertical move according to Fleming's left-hand rule by using a permanent magnet. In addition, the magnet 215 supplies a strong and constant DC magnetic flux within the magnetic circuit.

The voice coil 230 has a magnet inside or outside of the voice coil 230, and is included in a magnetic field formed by a magnet. In addition, the voice coil 230 receives an electrical signal from an output terminal of an amplifier (not illustrated) via a gold thread line (not illustrated) and generates a vibration force by repelling an energy amount of an electric input. In addition, since the voice coil 230 is adhered to the cone 240, the movement of the cone 240 is caused by the movement of the voice coil 230. The voice coil 230 is configured by winding a wire for which a conductor such as copper, aluminum and the like is coated with an insulating layer and an adhesion layer on a bobbin such as paper, aluminum sheet, or the like.

The spider 235 is fixed so that the cone 240 and the voice coil 230 maintain accurate centering. In addition, the spider 235 may play a role of a damper which suppresses unwanted vibration. In addition, a plurality of electric wires may be connected to the spider 235 so that an electric signal is transferred to the rotation knob 255 connected to the dust cap 250 and the touch display 360.

The cone 240 generates a vibration in the speaker 120 and reproduces an audio content. In addition, the cone 240 is generally formed to be a conical shape, and receives a vibration of the voice coil 230 and generates a sound wave using a compression and fluctuation of air. In addition, the cone 240 influences most of the reproduction sound quality of an audio content. In addition, the cone 240 may change a sound quality, a tone, and the like according to a material constituting the cone 240, and change the characteristics of a reproduction frequency according to a size of the cone 240 and a shape of the weight cross section.

The edge surround 245 is the outermost portion of the cone 240 which allows a body portion of the cone 240 to vibrate smoothly. In addition, the edge surround 245 supports such that the body portion of the cone 240 returns to the center position.

The dust cap 250 prevents a foreign substance from entering between a gaps of the magnetic circuit. In addition, the dust cap 250 allows a shape of the cone to be maintained. In addition, the high frequency characteristics of the speaker device 100 may be changed according to a material, weight and cross-sectional shape of the dust cap 250.

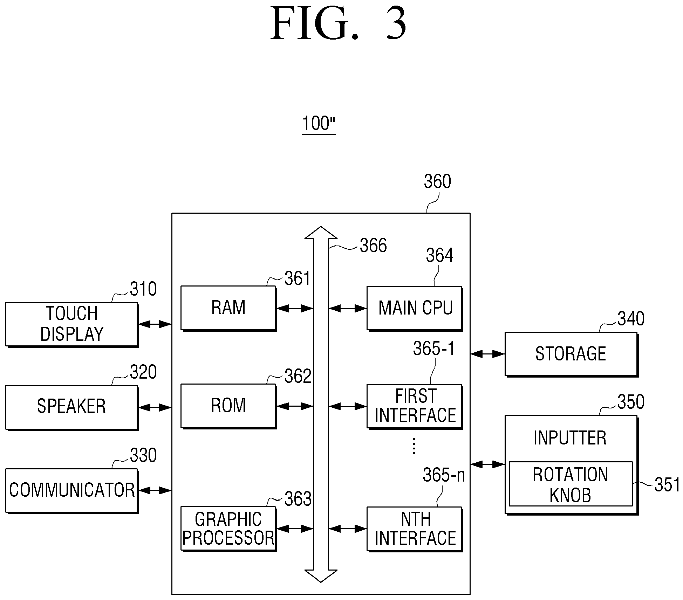

Hereinafter, various example embodiments of the present disclosure will be described with reference to FIGS. 3-9. FIG. 3 is a block diagram showing a detailed configuration of a speaker device 100, according to an example embodiment. As illustrated in FIG. 2, the speaker device 100 includes a touch display 310, a speaker 320, a communicator (e.g., including communication circuitry) 330, a storage 340, an inputter (e.g., including input circuitry) 350, and a processor (e.g., including processing circuitry) 360.

FIG. 3 illustrates various elements by taking an example according to which the speaker device 100 is a device equipped with various functions such as a touch input function, an audio content reproduction function, and/or the like. The descriptions regarding the elements of FIG. 3 which have been provided above will be omitted.

The touch display 310 displays image data received from an image receiver (not illustrated), at least one of a video frame which is processed image data by the video processor 180 and various screens generated from the graphic processor 363. In addition, the touch display 310 receives an input of a user's touch through a touch inputter. In particular, the touch display 310 may display a UI for receiving an input of a user operation and receive an input of a user's touch.

The speaker 320 outputs various kinds of alarm sounds or voice messages in addition to various audio data on which various processing operations such as decoding, amplification, and noise filtering are performed by an audio processor. In particular, the speaker 320 may output an audio content received through a near field wireless communication. Meanwhile, the speaker 320 may be implemented as a variety of output terminals which are capable of outputting audio data.

The communicator 330 is configured to communicate with various kinds of external devices in various communication methods. The communicator 330 may include a WiFi chip, a Bluetooth® chip, an NFC chip, and a wireless communication chip. Herein, the WiFi chip, the Bluetooth® chip and the NFC chip respectively perform communication according to WiFi method, Bluetooth® method, and NFC method. The NFC chip refers to a chip which operates in a near field communication (NFC) method using 13. 56 MHz band among various RF-ID frequency bands such as 135 kHz, 13.56 MHz, 433 MHz, 860-960 MHz, 2.45 GHz, and the like. When the WI-FI chip or the Bluetooth chip is used, various connection information such as SSID and session key may be first exchanged, communication may be connected by using the connection information, and various information may be exchanged. The wireless communication chip represents a chip which communicates according to various communication standards such as IEEE, Zigbee, 3rd Generation (3G), 3rd Generation Partnership Project (3GPP), Long Term Evolution (LTE) and so on.

In particular, the communicator 330 may receive a content from an external server. In addition, when a password for connecting to the wireless Internet is input through at least one of the rotation knob 351 and the touch display 310, the communicator 330 may connect to the wireless Internet under the control of the processor 360. In addition, when a user operation is input through at least one of the touch display 310 and the rotation knob 351, the communicator 330 may transmit a signal corresponding to the input user operation to an external server or an external device under the control of the processor 360.

The storage 340 stores various modules to operate the speaker device 100. The storage 340 stores various modules for driving the electronic apparatus 200. For example, the storage 340 may store software including a base module, a sensing module, a communication module, a presentation module, a web browser module, and a service module. In this case, the base module is a basic module that processes signals transferred from each hardware included in the speaker device 100 and transfers the processed signals to an upper layer module. The sensing module is a module collecting information from various sensors and analyzing and managing the collected information and may include a face recognizing module, an audio recognizing module, a motion recognizing module, an NFC recognizing module, and the like. The presentation module is a module for configuring a display screen and may include a multimedia module for playing and outputting multimedia contents and a UI rendering module for performing UI and graphic processing. The communication module is a module for performing communication with the outside. The web browser module is a module for performing web browsing to access a web server. The service module includes various applications to provide various services.

As described above, the storage 340 may include various program modules, but some of the various program modules may be omitted or changed, or new modules may be added according to the type and characteristics of the speaker device 100.

In particular, the storage 340 may store an audio content received from an external server or an external device.

Meanwhile, according to the example embodiment of the present disclosure, the storage 340 may be defined as an ROM 362 and/or an RAM 361 within the processor 360 or a memory card (for example, micro SD card, memory stick, and the like) equipped in the speaker device 100.

The inputter 350 receives a user command to control the speaker device 100. In particular, the inputter 350 includes a rotation knob 351. In addition, the inputter 350 may include various input circuitry, such as, for example, and without limitation, a button, a voice inputter, a keyboard, and a mouse to receive the user command.

The processor 360 controls the overall operations of the speaker device 100 by using various programs stored in the storage 340.

As illustrated in FIG. 3, the processor 360 may include, for example, a RAM 361, a ROM 362, a graphic processor (e.g., a GPU) 363, a main CPU 364, first to nth interfaces 365-1 to 365-n, and bus 366. The RAM 361, the ROM 362, the graphic processor 363, the main CPU 364, and the first to the nth interface 365-1∼365-n may be interconnected through the bus 366.

The ROM 362 may store a command set, and the like for system booting. When a turn-on command is input and thus the electric power is supplied, the main CPU 364 may copy the stored O/S in the storage 340 to RAM 361 according to the commands stored in ROM 362, and boot the system by executing O/S. In response to the booting being completed, the main CPU 364 may copy various application programs stored in the storage 340 to the RAM 361, and execute the application programs copied to the RAM 361 to perform various operations.

The graphic processor 363 uses an operator (not illustrated) and a renderer (not illustrated) to create a screen including various objects such as a pointer, an icon, an image, and a text. The operator uses the control command received from the input to operate attribute values, such as coordinate values, forms, sizes, and colors in which each object will be displayed according to a layout of the screen. The renderer generates screens of various layouts including objects based on the attribute values calculated by the operator. The screen generated by the renderer (not illustrated) is displayed on a display area of the display 210.

The main CPU 364 accesses the storage 340 and performs booting using the O/S stored in the storage 340. In the ROM 422, command sets for system booting etc. are stored. In addition, the main CPU 364 performs various operations using various programs stored in the storage 340.

The first to the nth interface (365-1 to 365-n) are connected to the above-described various elements. One of the interfaces may be a network interface which is connected with an external device via a network.

In particular, the processor 360 may control the speaker device 100 according to a user operation input through a UI displayed on the touch display 310.

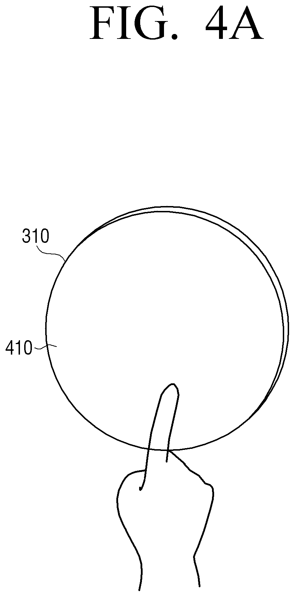

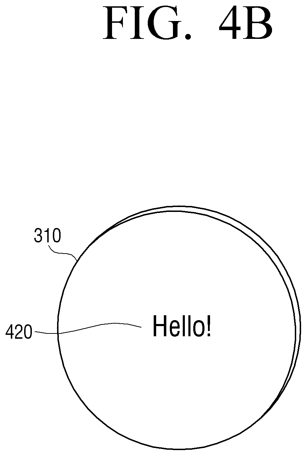

In more detail, as illustrated in FIG. 4A, when the speaker device 100 is in an off state, the touch display 310 may be also turned off 410. When a user operation to touch a touch display is input while the speaker device 100 is in an off state, the processor 360 may activate the touch display 310 while turning on the speaker device 100. In this regard, a user command to touch the touch display 310 is input to turn on the speaker device 100. However, this is only an example, and the speaker device 100 may be turned on according to a user operation to rotate the rotation knob 351. As illustrated in FIG. 4B, the processor 360 may control the touch display 310 to display a phrase "Hello!" 420 to show that the speaker device 100 is turned on.

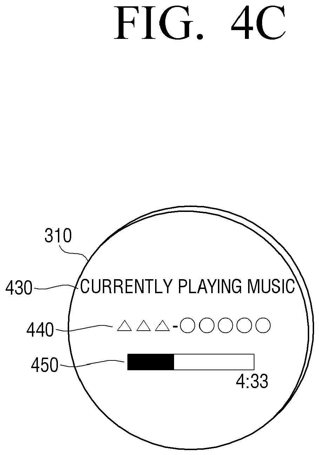

In addition, when a user operation is not input for a predetermined time or more while the speaker device 100 is reproducing an audio content, the processor may deactivate the touch display 310, as illustrated in FIG. 4A. In a state that the speaker device 100 is in an on state and the touch display 310 is deactivated, when a user operation to touch the touch display or to rotate the rotation knob is input, the processor 360 may activate the touch display 310. In addition, as illustrated in FIG. 4C, the processor 360 may control the touch display 310 to display a title 440 and reproduction time 450 of an audio content currently being reproduced, and the like.

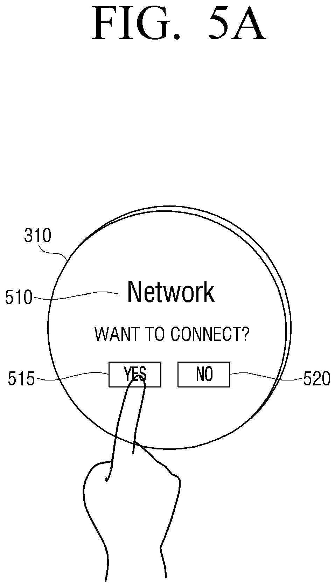

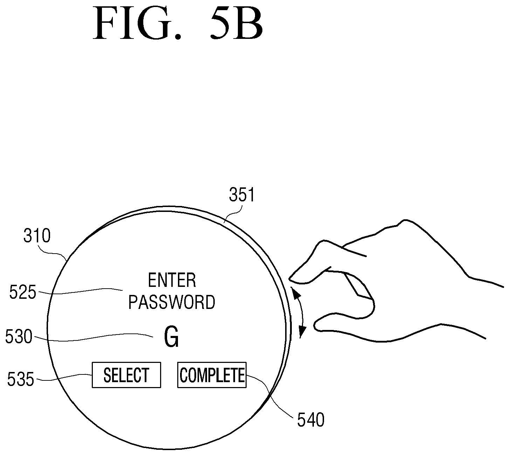

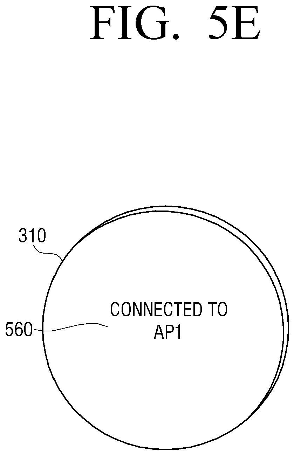

In addition, as illustrated in FIG. 5A, the processor 360 may control the touch display 310 to display a guidance message such as "Want to connect to network?" 510 to receive an input of a password for connecting to the wireless Internet. In addition, when a user operation to select "Yes" 515 is input through the touch display 310, the processor 360 may control the touch display 310 to display a guidance message such as "Please enter password" 525 to receive an input of a password for connecting to the wireless Internet, as illustrated in FIG. 5B. In addition, the processor 360 may control the touch display 310 to display alphabets, numbers, and the like, in order according to a user operation to rotate the rotation knob 351.

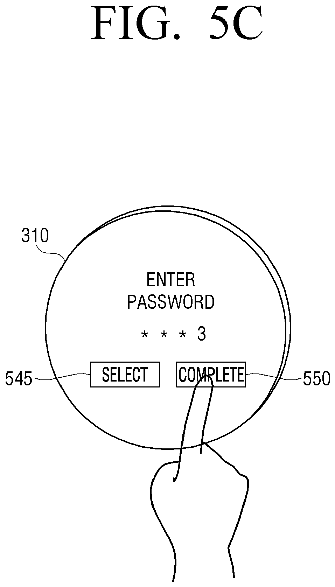

In more detail, the processor 360 may control the touch display 310 to display a, b, c, ..., 1, 2, 3, ... in order according to a user operation to rotate the rotation knob 351. In addition, in a state that "G" is displayed on the touch display 310, when a user's touch to select "Select" 535 is input, the processor 360 may receive an input of "G". In this manner, when all passwords for connecting to the wireless Internet are entered, as illustrated in FIG. 5C, the processor 360 may determine that all passwords have been entered through a user's touch to select "Complete" 550.

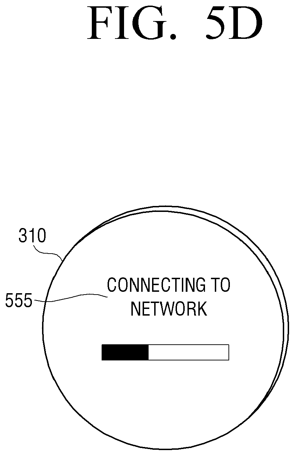

In addition, when a password for connecting with the wireless Internet is input, the processor 360 may control the communicator 330 to connect with the wireless Internet. In addition, as illustrated in FIG. 5D, the processor 360 may control the touch display 310 to display a guidance message such as "Connecting to network" 555 as illustrated in FIG. 5D. According to an example embodiment, the processor 360 may control the touch display 310 to display alphabets, numbers, or the like, in order by rotating the rotation knob 351 included in the touch display 310, and when a desired alphabet or a desired number is displayed, receive an input of a password through a user input to select the alphabet or the number through the touch display 310. However, this is only an example, and the processor 360 may control the touch display 310 to simultaneously display a plurality of alphabets or numbers and receive an input of an alphabet or a number through a user's touch.

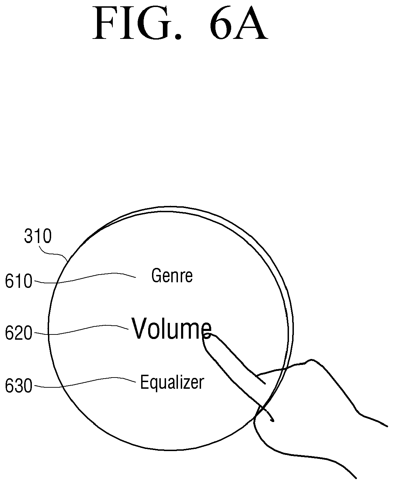

In addition, as illustrated in FIG. 6A, the processor 360 may control the touch display 310 to display a UI for receiving an input of a user operation to select at least one of a genre 610 for genre selection, a volume 620 for volume adjustment, and an equalizer 630 for sound quality adjustment.

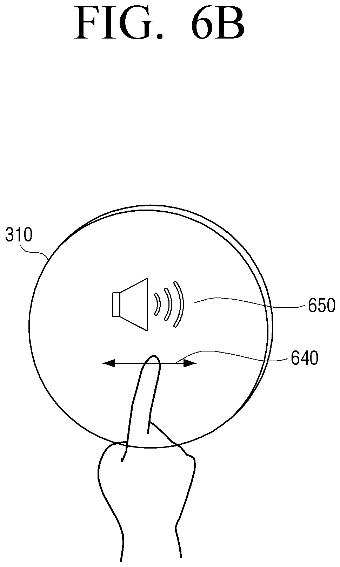

When a user's touch to select the volume 620 for volume adjustment is input through the touch display 310, as illustrated in FIG. 6B, the processor 360 may control the touch display 310 to display a UI 650 for volume adjustment. In more detail, while the UI 650 for volume adjustment is displayed, when a user's touch to drag 640 in left and right directions is input through the touch display 310, the processor 360 may control the speaker 320 to adjust the volume. For example, while the UI 650 for volume adjustment is displayed, when a user's touch to drag in the right direction is input through the touch display 310, the processor 360 may control the speaker 320 to increase the volume. According to an example embodiment, FIG. 6B illustrates that a volume is adjusted by dragging 640 in the left and right directions, but this is only an example. The volume may also be adjusted by receiving an input of a user's touch to drag in the up and down directions.

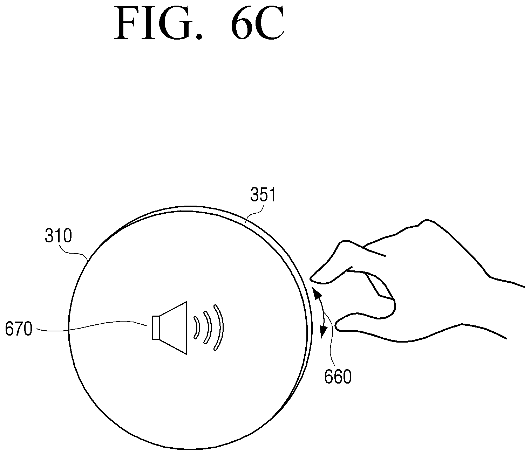

According to another example embodiment, as illustrated in FIG. 6C, while the UI 670 for volume adjustment is displayed, when a user operation to rotate 660 the rotation knob 351 is input, the processor 360 may control the speaker 320 to adjust the volume. For example, while the UI 670 for volume adjustment is displayed through the touch display 310, when a user operation to rotate the rotation knob 351 clockwise, the processor 360 may control the speaker 320 to increase the volume.

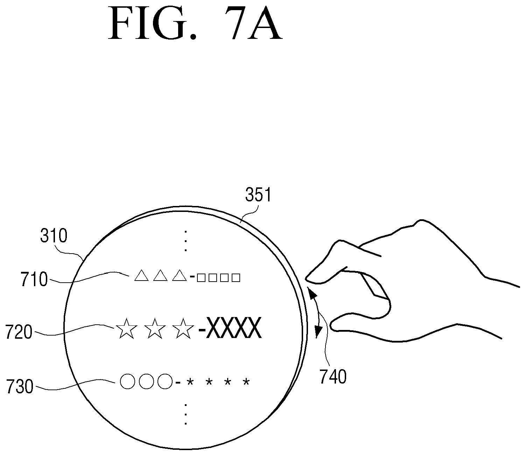

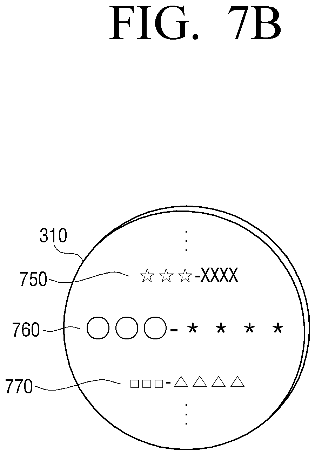

In addition, as illustrated in FIG. 7A, the processor 360 may control the touch display 310 to display a title of a content being reproduced. For example, the processor 360 may control the touch display 310 to display the title "☆☆☆-XXXX" 720 of a content currently being reproduced. In addition, the processor 360 may control the touch display 310 to display, together with the content currently being reproduced, the title "ΔΔΔ-□□□□" 710 of the previous reproduced content and the title "○○○-****" 730 of the next reproduced content. In addition, as illustrated in FIG. 7B, while the title "☆☆☆-XXXX" 720 of the content currently being reproduced is displayed, when a user operation 740 to rotate the rotation knob 351 clockwise, the processor 360 may control the touch display 310 to display the title "○○○-****" 760 of the next reproduced content. In FIGS. 7A and 7B, while the title of the currently reproduced content is displayed, when a user operation to rotate the rotation knob 351 clockwise/counterclockwise is input, the processor 360 displays the title of next/previous reproduced content. However, the example is not limited thereto, and when a user's touch to drag vertically or horizontally is input through the touch display 310, the processor 360 may also control the touch display 310 to display the title of the next/previous reproduced content.

According to another example embodiment, the processor 360 may control the touch display 310 to display lyrics of a content currently being reproduced. In addition, the processor 130 may control the touch display 310 to display the previous or next sentence of the displayed lyrics, according to a user operation to drag the touch display 310 or rotate a rotation knob 351. For example, while lyrics of a content currently being reproduced are displayed through the touch display 310, when a user operation to drag upward is input through the touch display 310, the processor 360 may control the touch display 310 to display the previous sentence of the displayed lyrics. As another example, while lyrics of a content currently being reproduced are displayed through the touch display 310, when a user operation to rotate a rotation knob 351 counterclockwise, the processor 310 may control the touch display 310 to display the previous sentence of the displayed lyrics.

In addition, the processor 360 may control the touch display 310 to display a UI for receiving an input of a user operation to select at least one of a genre 810 for genre selection, an equalizer 820 for sound quality adjustment, and a volume 830 for volume adjustment. In addition, when a user operation is input through at least one of a touch input to the touch display 310 or a rotation of a rotation knob 351, the processor 360 may control the touch display 310 to display a subordinate UI corresponding to the input user operation.

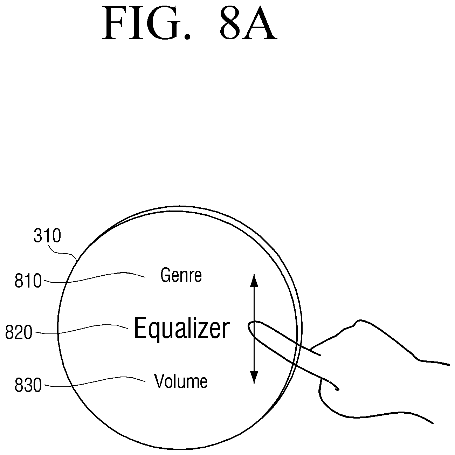

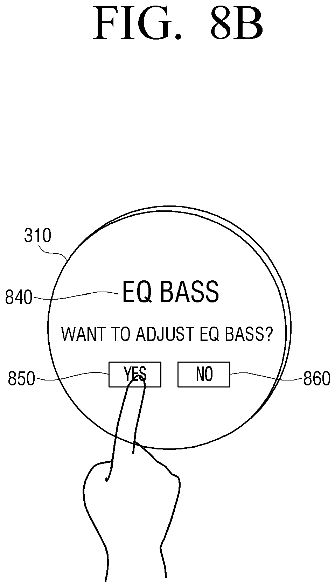

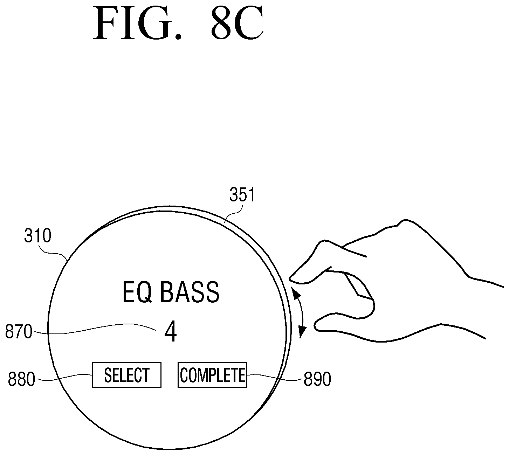

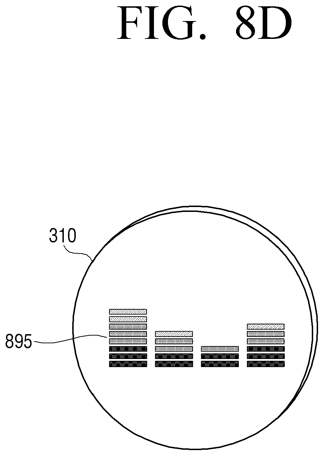

For example, as illustrated in FIG. 8A, while a UI for receiving an input of a user operation to select at least one of the genre 810 for genre selection, the equalizer 820 for sound quality adjustment, and the volume 830 for volume adjustment is displayed, when a user's touch to select the equalizer 820 for sound quality adjustment is input through the touch display 310, as illustrated in FIG. 8B, the processor 360 may control the touch display 310 to display a guide message such as "Want to adjust EQ BASS?" to adjust sound quality. In addition, when a user's touch to select "Yes" 850 is input, as illustrated in FIG. 8C, the processor 360 may control the touch display 310 to display a UI for adjusting EQ BASS. In addition, when a user operation to rotate the rotation knob 351 is input, the processor 360 may adjust the EQ BASS value to "4" 870 according to a rotating direction and rotation angle of the rotation knob 351. In addition, when a user's touch to select "Select" 880 is input through the touch display 810, as illustrated in FIG. 8D, the processor 360 may control the touch display 310 to display a UI 895 indicating that the EQ BASS value is adjusted to 4.

In addition, when a user operation is input through the touch display 310, the processor 360 may control the communicator 330 to transmit a signal corresponding to the input user operation to an external server.

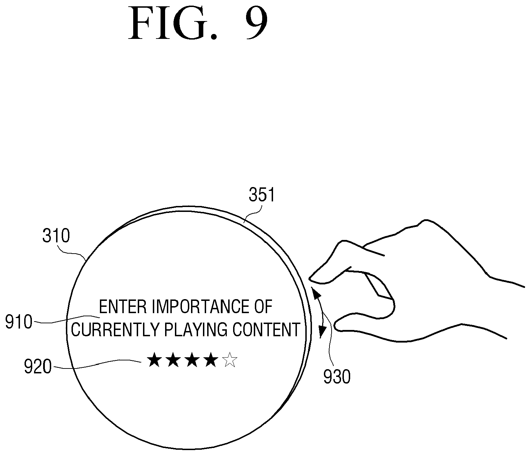

For example, as illustrated in FIG. 9, while a music content is reproduced, the processor 360 may control the touch display 310 to display a guide message such as "Enter importance of currently reproduced content" 910 to receive an input of a preference regarding the currently reproduced music content. In addition, when the importance regarding the currently reproduced music content of "★★★★☆" 920 is input through the touch display 310, the processor 360 may control the communicator 330 to transmit a signal corresponding to the input importance to a music content providing server transmitting the music content. Accordingly, the communicator 330 may receive, from the music content providing server, a play list of a music content in which the importance of the music content is reflected.

According to the various example embodiments as described above, a user may be provided with a UI which is capable of controlling a variety of functions through a minimum touch display that is disposed in a sound emission direction but does not interrupt the function of the speaker. In addition, the user can control various functions of the speaker through a touch or a rotation of a rotation knob.

Meanwhile, the above-described method may be implemented as a program that may be executed by a computer and may be implemented in a general-purpose digital computer that operates the program using a computer-readable recording medium. In addition, the structure of the data used in the above-described method may be recorded on a computer-readable recording medium by various means. The non-transitory computer-readable medium may include storage medium such as a magnetic storage medium (e.g., ROM, floppy disc, a hard disc, and the like) or an optical readable medium (e.g., a compact disc (CD), a digital versatile disc (DVD), and the like).

The foregoing example embodiments and advantages are merely examples and are not to be construed as limiting the present disclosure. Therefore, the methods disclosed herein should be considered in an illustrative aspect rather than a restrictive aspect. The scope of the present disclosure should be defined by the following claims rather than the above-mentioned description.

## Claims

1. A speaker device (100), comprising:
a speaker (120, 320);
a touch display (110, 310) which is disposed at a central part of a vibration plate included in the speaker (120, 320), displays a user interface (UI) for receiving an input of a user operation, and receives an input of a user's touch; and
a processor (130, 360) configured to control the speaker device (100) according to a user operation input through the UI,
**characterised in that**
the touch display (110, 310) forms a rotation knob (250) that receives an input of a user operation through rotation.

2. The speaker device according to claim 1, wherein the touch display (110) is coupled to an upper part of a dust cap (250) disposed at a central part of the vibration plate.

3. The speaker device (100) as claimed in claim 1, further comprising:
a communicator (330) configured to carry out communication with an external device,
wherein the processor (130, 360) controls the touch display (110, 310) to display a UI for receiving an input of a password for connecting to a wireless Internet, and, when the password is input through at least one of the rotation knob (250) and the user's touch, controls the communicator (330) to connect to the wireless Internet.

4. The speaker device (100) as claimed in claim 1, wherein the processor (130, 360) controls the touch display (110, 310) to display a UI for adjusting a volume, and based on a user command to adjust a volume being input through at least one of the rotation knob (250) and the touch display (110, 310), controls the speaker (120, 320) to adjust a volume based on the user command.

5. The speaker device (100) as claimed in claim 1, wherein the processor (130, 360) controls the touch display (110, 310) to display a title of a content being reproduced and to display a play list including the content being reproduced according to a user operation to drag the touch display (110, 310) or rotate the rotation knob (250).

6. The speaker device (100) as claimed in claim 1, wherein the processor (130, 360) controls the touch display (110, 310) to display lyrics of a content being reproduced and to display a previous sentence of a sentence of the displayed lyrics or a next sentence of the sentence of the displayed lyrics according to a user operation to rotate the rotation knob (250).

7. The speaker device (100) as claimed in claim 1, wherein the processor controls the touch display (110, 310) to display a UI for receiving an input of a user operation to select at least one of a genre selection, a volume adjustment, and a sound quality adjustment and to, based on a user operation being input through a touch input or a rotation of the rotation knob (250), display a subordinate UI corresponding to the user operation.

8. The speaker device (100) as claimed in claim 1, further comprising:
a communicator (330) configured to carry out communication with an external device,
wherein the processor (130, 360), based on a user operation being input through the touch display (110, 310), controls the communicator (330) to transmit a signal corresponding to the user operation to an external server.

9. The speaker device (100) as claimed in claim 1, wherein the processor (130, 360), based on a user operation not being input for a predetermined time or longer, controls the touch display (110, 310) to display a UI indicating a standby mode.

10. The speaker device (100) as claimed in claim 9, wherein the UI indicating the standby mode includes at least one of a current time, a title of a content being reproduced, and a remaining battery.

## Patentansprüche

1. Lautsprechervorrichtung (100), umfassend:
einen Lautsprecher (120, 320);
einen Touchscreen (110, 310), der an einem zentralen Teil einer in dem Lautsprecher (120, 320) enthaltenen Vibrationsplatte angeordnet ist, wobei er eine Benutzerschnittstelle (UI) zum Empfangen einer Eingabe einer Benutzerbedienung anzeigt und eine Eingabe einer Benutzerberührung empfängt; und
einen Prozessor (130, 360), der konfiguriert ist, um die Lautsprechervorrichtung (100) gemäß einer Benutzerbedienungseingabe über die UI zu steuern, **dadurch gekennzeichnet, dass**
der Touchscreen (110, 310) einen Drehknopf (250) bildet, der eine Eingabe einer Benutzerbedienung durch Drehung empfängt.

2. Lautsprechervorrichtung nach Anspruch 1, wobei der Touchscreen (110) mit einem oberen Teil einer Staubkappe (250) gekoppelt ist, die an einem zentralen Teil der Vibrationsplatte angeordnet ist.

3. Lautsprechervorrichtung (100) nach Anspruch 1, ferner umfassend:
einen Kommunikator (330), der konfiguriert ist, um eine Kommunikation mit einer externen Vorrichtung auszuführen, wobei der Prozessor (130, 360) den Touchscreen (110, 310) steuert, um eine UI zum Empfangen einer Eingabe eines Passworts zum Verbinden mit einem drahtlosen Internet anzuzeigen, und, wenn das Passwort durch den Drehknopf (250) und/oder die Benutzerberührung eingegeben wird, den Kommunikator (330) so steuert, dass eine Verbindung zum drahtlosen Internet hergestellt wird.

4. Lautsprechervorrichtung (100) nach Anspruch 1, wobei der Prozessor (130, 360) den Touchscreen (110, 310) steuert, um eine UI zum Einstellen einer Lautstärke anzuzeigen, und basierend auf einem Benutzerbefehl, um eine Lautstärke einzustellen, die über den Drehknopf (250) und/oder den Touchscreen (110, 310) eingegeben wurde, den Lautsprecher (120, 320) zum Einstellen einer Lautstärke basierend auf dem Benutzerbefehls steuert.

5. Lautsprechervorrichtung (100) nach Anspruch 1, wobei der Prozessor (130, 360) den Touchscreen (110, 310) steuert, um einen Titel eines wiedergegebenen Inhalts anzuzeigen und eine Wiedergabeliste anzuzeigen, die den wiedergegebenen Inhalt gemäß einer Benutzerbedienung, um den Touchscreen (110, 310) zu ziehen oder den Drehknopf (250) zu drehen, einschließt.

6. Lautsprechervorrichtung (100) nach Anspruch 1, wobei der Prozessor (130, 360) den Touchscreen (110, 310) steuert, um den Liedtext eines wiedergegebenen Inhalts anzuzeigen und um einen vorherigen Satz eines Satzes des angezeigten Liedtextes oder einen nächsten Satz des Satzes des angezeigten Liedtextes gemäß einer Benutzerbedienung zum Drehen des Drehknopfs (250) anzuzeigen.

7. Lautsprechervorrichtung (100) nach Anspruch 1, wobei der Prozessor den Touchscreen (110, 310) steuert, um eine UI zum Empfangen einer Eingabe einer Benutzerbedienung anzuzeigen, um eine Genreauswahl, eine Lautstärkeanpassung und/oder eine Klangqualitätsanpassung auszuwählen und um basierend auf einer Benutzerbedienung, die durch eine Berührungseingabe oder eine Drehung des Drehknopfs (250) eingegeben wurde, eine untergeordnete UI anzuzeigen, die der Benutzerbedienung entspricht.

8. Lautsprechervorrichtung (100) nach Anspruch 1, ferner umfassend:
einen Kommunikator (330), der konfiguriert ist, um eine Kommunikation mit einer externen Vorrichtung auszuführen, wobei der Prozessor (130, 360) basierend auf einer Benutzerbedienung über den Touchscreen (110, 310) den Kommunikator (330) zum Senden eines Signals entsprechend der Benutzerbedienung an einen externen Server steuert.

9. Lautsprechervorrichtung (100) nach Anspruch 1, wobei der Prozessor (130, 360) basierend auf einer Benutzerbedienung, die für eine vorbestimmte Zeit oder länger nicht eingegeben wurde, den Touchscreen (110, 310) steuert, um eine UI anzuzeigen, die einen Standby-Modus angibt.

10. Lautsprechervorrichtung (100) nach Anspruch 9, wobei die UI, die den Standby-Modus anzeigt, eine aktuelle Zeit, einen Titel eines wiedergegebenen Inhalts und/oder eine verbleibende Akkulaufzeit einschließt.

## Revendications

1. Dispositif de haut-parleur (100), comprenant :
un haut-parleur (120, 320) ;
un élément d'affichage tactile (110, 310) qui est disposé sur une partie centrale d'une plaque de vibration incluse dans le haut-parleur (120, 320), affiche une interface utilisateur (UI) pour recevoir une entrée d'une opération d'utilisateur, et reçoit une entrée d'une touche d'utilisateur ; et
un processeur (130, 360) configuré pour contrôler le dispositif de haut-parleur (100) selon une entrée d'opération d'utilisateur au moyen de l'UI,
**caractérisé en ce que**
l'élément d'affichage tactile (110, 310) forme un bouton de rotation (250) qui reçoit une entrée d'une opération d'utilisateur au moyen d'une rotation.

2. Dispositif de haut-parleur selon la revendication 1, où l'élément d'affichage tactile (110) est couplé à une partie supérieure d'un bouchon anti-poussière (250) disposé sur une partie centrale de la plaque de vibration.

3. Dispositif de haut-parleur (100) selon la revendication 1, comprenant en outre :
un communicateur (330) configuré pour effectuer une communication avec un dispositif externe,
où le processeur (130, 360) contrôle l'élément d'affichage tactile (110, 310) pour l'affichage d'une UI pour recevoir une entrée d'un mot de passe pour la connexion à un Internet sans fil et, lorsque le mot de passe est saisi au moyen d'au moins l'un entre le bouton de rotation (250) et la touche de l'utilisateur, contrôle le communicateur (330) pour la connexion à l'Internet sans fil.

4. Dispositif de haut-parleur (100) selon la revendication 1, où le processeur (130, 360) contrôle l'élément d'affichage tactile (110, 310) pour l'affichage d'une UI pour régler un volume et, en fonction d'une commande d'utilisateur de réglage d'un volume qui est saisie au moyen d'au moins l'un entre le bouton de rotation (250) et l'élément d'affichage tactile (110, 310), contrôle le haut-parleur (120, 320) pour le réglage d'un volume en fonction de la commande d'utilisateur.

5. Dispositif de haut-parleur (100) selon la revendication 1, où le processeur (130, 360) contrôle l'élément d'affichage tactile (110, 310) pour l'affichage d'un titre d'un contenu qui est reproduit et pour l'affichage d'une liste de lecture incluant le contenu qui est reproduit selon une opération d'utilisateur de glissement de l'élément d'affichage tactile (110, 310) ou de rotation du bouton de rotation (250).

6. Dispositif de haut-parleur (100) selon la revendication 1, où le processeur (130, 360) contrôle l'élément d'affichage tactile (110, 310) pour l'affichage d'un texte d'un contenu qui est reproduit et pour l'affichage d'une phrase précédente à une phrase du texte affiché ou une phrase suivante à la phrase du texte affiché selon une opération d'utilisateur de rotation du bouton de rotation (250).

7. Dispositif de haut-parleur (100) selon la revendication 1, où le processeur contrôle l'élément d'affichage tactile (110, 310) pour l'affichage d'une UI pour recevoir une entrée d'une opération d'utilisateur de sélection d'au moins l'un parmi une sélection de genre, un réglage de volume, et un réglage de qualité de son et pour, en fonction d'une opération d'utilisateur qui est saisie au moyen d'une entrée tactile ou une rotation du bouton de rotation (250), l'affichage d'une UI subordonnée correspondant à l'opération d'utilisateur.

8. Dispositif de haut-parleur (100) selon la revendication 1, comprenant en outre :
un communicateur (330) configuré pour effectuer la communication avec un dispositif externe,
où le processeur (130, 360), en fonction d'une opération d'utilisateur qui est saisie au moyen de l'élément d'affichage tactile (110, 310), contrôle le communicateur (330) pour la transmission d'un signal correspondant à l'opération d'utilisateur à un serveur externe.

9. Dispositif de haut-parleur (100) selon la revendication 1, où le processeur (130, 360), en fonction d'une opération d'utilisateur n'étant pas saisie pendant un temps prédéterminé ou plus long, contrôle l'élément d'affichage tactile (110, 310) pour l'affichage d'une UI indiquant un mode de veille.

10. Dispositif de haut-parleur (100) selon la revendication 9, où l'UI indiquant le mode de veille comprend au moins l'un parmi une heure actuelle, un titre d'un contenu qui est reproduit, et une batterie restante.
